# EUROPÄISCHE PATENTSCHRIFT

(11) **EP 0 658 289 B1**
(45) Veröffentlichungstag und Bekanntmachung des Hinweises auf die Patenterteilung: **10.12.1997**
(21) Anmeldenummer: 93919249.8
(22) Anmeldetag: 03.09.1993
(51) Int. Cl.: H02H 7/08, G11B 33/14

(54) **VERFAHREN UND VORRICHTUNG ZUR ANSTEUERUNG MEHRERER VERBRAUCHER**
PROCESS AND DEVICE FOR DRIVING A MULTIPLICITY OF LOADS
PROCEDE ET DISPOSITIF POUR COMMANDER UNE MULTIPLICITE DE CONSOMMATEURS

(30) Priorität: 04.09.1992 DE 4229344
(43) Veröffentlichungstag der Anmeldung: 21.06.1995
(73) Patentinhaber: DEUTSCHE THOMSON-BRANDT GMBH, 78048 Villingen-Schwenningen (DE)
(72) Erfinder: GLEIM, Günter, D-78052 Villingen-Schwenningen (DE); LINK, Hermann, D-78052 Villingen-Schwenningen (DE); HEIZMANN, Friedrich, D-78052 Villingen-Schwenningen (DE)
(86) Internationale Anmeldenummer: EP9302374
(87) Internationale Veröffentlichungsnummer: WO9406188

(56) Entgegenhaltungen:
- EP-A- 0 254 873
- EP-A- 0 468 806
- US-A- 4 737 867

## Beschreibung

Die vorliegende Erfindung betrifft ein Verfahren gemäß dem Oberbegriff von Anspruch 1 und eine Vorrichtung gemäß dem Oberbegriff des ersten Sachanspruchs.

Es ist bekannt, daß elektrische Geräte während ihres Betriebes eine Verlustleistung verursachen, wodurch eine entsprechende Wärmeentwicklung entsteht. Diese Wärmeentwicklung tritt insbesondere auf bei Leistungsendstufen für nachgeschaltete Verbraucher. Kommt es bei dem Betrieb dieser Verbraucher zu einer Störung, wie beispielsweise einem Kurzschluß, einer mechanischen Behinderung oder dergleichen, so ist mit einer übermäßigen Wärmeentwicklung zu rechnen. Diese führt zu einer starken Erwärmung, wobei Temperaturen auftreten, die zu einer Zerstörung der Leistungsendstufen oder des gesamten Gerätes führen können.

Bei einem Gerät, das Informationen auf ein Band speichert und/oder von einem Band liest, wie beispielsweise ein Videorekorder, können mechanische Störungen beispielsweise bei einem Antrieb für das Speicherband, das heißt beispielsweise der Videokassette, auftreten. Die Endstufen, die einen entsprechenden Antriebsmotor ansteuern werden dabei übermäßig erhitzt.

Es ist bekannt, Geräte derart auszustatten, daß eine Temperaturüberwachung der Endstufen oder des Gerätes erfolgt und daß bei Störungen der genannten Art in denen eine maximale Betriebstemperatur, im folgenden auch Alarmtemperatur genannt, erreicht wird, der betreffende Verbraucher nicht mehr angesteuert wird.

Aus EP 468 806 ist ein Verfahren und eine Vorrichtung gemäß den Oberbegriffen der unabhängigen Ansprüche, insbesondere ein Materialtransportfahrzeug mit einem Motor und einem Leistungsverstärker bekannt, das eine Steuerung aufweist, die in Abhängigkeit der Motor- und Leistungsendstufentemperatur die Beschleunigung des Motors regelt, um eine überhitzung des Motors und seiner Leistungsendstufe zu verhindern.

US-Patent 4,737,867 beschreibt ein System mit diversen Verbrauchern, bei dem eine Steuerung nur diejenigen Verbraucher mit Leistung aus einer Quelle selektiv ein- und ausschaltet, die gerade benötigt werden.

Es ist ebenfalls bekannt, einen niedrigeren Temperaturwert festzusetzen, der einer sogenannten Warntemperatur entspricht, die vor Erreichen der Alarmtemperatur überschritten wird. Oberhalb der Warntemperatur wird der angeschlossene Verbraucher von seinem Normalbetrieb in einen Ruhezustand heruntergesteuert, bzw. von seiner momentanen Betriebsart in eine niedrigere Betriebsart. Einen ähnlichen Stand der Technik offenbart EP-A- 0254873.

Dabei können Probleme auftreten, wenn die Störung von einer anderen Quelle kommt oder durch einen Störfall bedingt ist. Dann kommt es trotz der Herabsetzung der Betriebsart zum Erreichen der Alarmtemperatur. Aus diesem Grund muß bei Erreichen der Warntemperatur das Gerät heruntergeregelt werden.

Bei einem Videorekorder, bei dem beispielsweise während des Suchlaufes eine mechanische Eehinderung im Bereich der Videokassette auftritt, was beispielsweise bei abgenutzten oder preiswerten Kassetten der Fall sein kann, heißt das, daß sowohl der Antriebsmotor als auch weitere Verbraucher, wie ein Trommelmotor, bei Erreichen der Warntemperatur zunächst verlangsamt werden und bei Erreichen der Alarmtemperatur gestoppt werden. Durch dieses zweistufige Verfahren können Überbeanspruchungen, Dehnungen sowie Zerstörungen des Videobandes weitestgehend vermieden werden. Es tritt jedoch für einen Zuschauer eine abrupte Unterbrechung des Betriebes auf.

Es ist die Aufgabe der vorliegenden Erfindung, eine Temperaturüberwachung bei einem Gerät derart weiterzuentwickeln, daß zum einen das überschreiten von kritischen Betriebstemperaturen weitgehend vermieden wird und zum anderen die Beeinträchtigungen für mit dem Gerät zusammenwirkende Mittel reduziert werden.

Diese Aufgabe wird gelöst durch ein Verfahren nach dem Hauptanspruch und durch eine Vorrichtung gemäß dem ersten Sachanspruch.

Erfindungsgemäß wird die Temperatur des Gerätes oder innerhalb des Gerätes, wie beispielsweise im Bereich der Endstufe, überwacht. Überschreitet diese einen ersten Temperaturwert, der einer hier als Spartemperatur bezeichneten Temperatur entspricht, so wird das Ausgangssignal derjenigen Endstufe, die gerade einen Verbraucher ansteuert, derart verändert, daß dem Verbraucher eine geringere Leistung zugeführt wird als zuvor. Damit wird auch der Leistungsabfall innerhalb der Endstufe und damit auch die Wärmeentwicklung geringer. Dieses kann
- a): zu einer Temperaturerniedrigung führen, wobei zu späteren Zeiten der Verbraucher eventuell wieder voll angesteuert werden kann,
- b): zu einer Temperaturstabilisierung führen, wobei der Verbraucher weiterhin mit reduzierter Leistung betrieben wird, oder
- c): kann im Fehlerfall zu einer weiteren Temperaturerhöhung führen, wobei zu späteren Zeiten ein zweiter Temperaturwert erreicht wird, der einer Warntemperatur entspricht, bei der den betreffenden Verbrauchern nur eine stark reduzierte Leistung zugeführt wird. Dadurch können der bzw. die Verbraucher bei einem eventuellen späteren Erreichen der Alarmtemperatur zerstörungsfrei ausgeschaltet werden.

Der Erfindung liegt die Erkenntnis zugrunde, daß bei einer Ansteuerung des Verbrauchers mit reduzierter Leistung sowohl einerseits das Erreichen der Warntemperatur weitgehend vermieden werden kann und andererseits die Beeinträchtigungen für mit dem Gerät zusammenwirkende Mittel oder Lebewesen stark verringert sind im Vergleich zu bekannten Systemen.

Für das Beispiel des Videorekorders bedeutet das beispielsweise, daß bei Störungen während des Suchlaufes der Motor für den Bandantrieb bei Erreichen der Spartemperatur mit reduzierter Leistung betrieben wird. Dadurch ist ein abzuspielender Film weiterhin für einen Zuschauer sichtbar, jedoch mit einer verminderten Geschwindigkeit. Dieses ist für den Zuschauer nur von untergordneter Bedeutung im Vergleich zu einem totalen zumindest zeitlichen Ausfall des Gerätes.

Ähnliche überlegungen gelten auch für weitere Betriebsarten des Videorekorders, wie schnelles Umspulen oder dergleichen.

Es ist ein Vorteil der Erfindung, daß Endstufen zur Ansteuerung von nachgeschalteten Verbrauchern nicht mehr derart dimensioniert zu werden brauchen, daß alle Eventualitäten von möglichen Störungen berücksichtigt werden. Dazu gehören auch andere thermische Beeinträchtigungen, wie beispielsweise durch Sonneneinstrahlung, nicht ausreichende Luftzirkulation zur Lüftung, oder dergleichen.

Durch die entsprechend geringere Dimensionierung diskret aufgebauter Schaltungen können preiswertere Bauelemente für die Endstufen verwendet werden. Wird eine Endstufe als integrierte Schaltung realisiert, so ist ein entsprechend geringerer Platzbedarf auf der (IC-) Halbleiter-Oberfläche erforderlich, wodurch ebenfalls Kosten eingespart werden können. Dies gilt gleichermaßen auch für diskrete Bauelemente auf der Leiterplatte.

Werden zwei oder mehr Spartemperaturen vorgesehen, so kann ein abgestufter Betrieb erfolgen. Dadurch werden Kompromisse gefunden zwischen einer eventuellen weiteren Erwärmung und der entsprechenden Beeinträchtigung.

Weitere Merkmale, Vorteile und Einzelheiten der Erfindung werden in den folgenden Ausführungsbeispielen anhand der Zeichnung erläutert. Dabei zeigen:
- Fig. 1 :: ein Ausführungsbeispiel für die Verwendung bei einem Videorekorder;
- Fig. 2 :: symbolisch die Abhängigkeit verschiedener Betriebs zustände von der Betriebstemperatur.

Bevor auf die Beschreibung der Ausführungsbeispiele näher eingegangen wird, sei darauf hingewiesen, daß die in den Figuren einzeln dargestellten Blöcke lediglich zum besseren Verständnis der Erfindung dienen. Üblicherweise sind einzelne oder mehrere dieser Blöcke zu Einheiten zusammengefaßt. Diese können in integrierter oder Hybridtechnik oder als programmgesteuerter Mikrorechner oder als Teil eines zu seiner Steuerung geeigneten Programmes realisiert sein.

Die in den einzelnen Stufen dargestellten Elemente können jedoch auch getrennt ausgeführt werden.

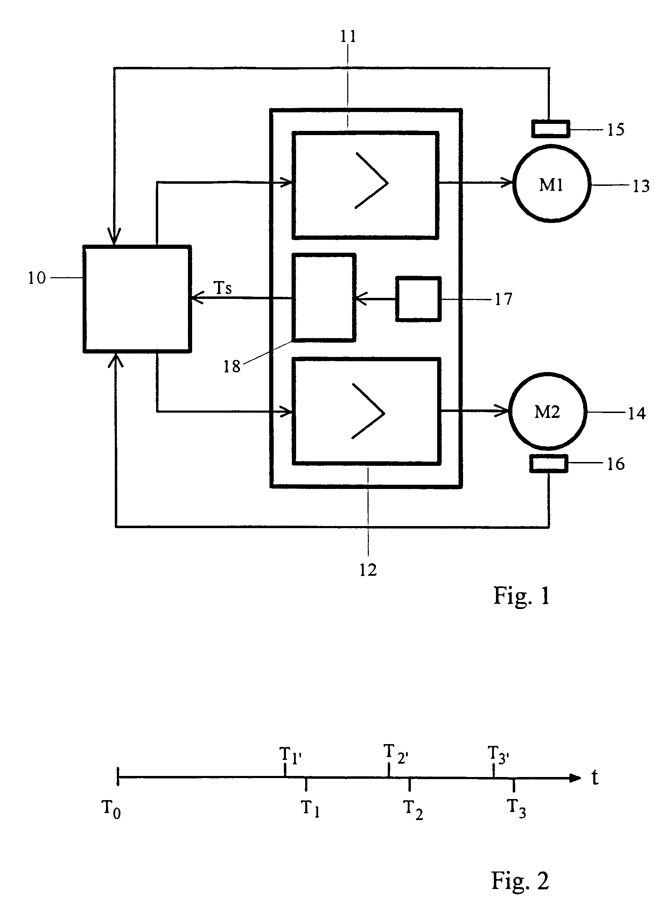

Fig. 1 zeigt ein Steuergerät 10, das beispielsweise als Mikrokomputer ausgebildet sein kann, zum Beispiel mit den Typen TMP90CK42 von Toshiba oder ST9040 von Thomson, das eine erste Endstufe 11 und eine zweite Endstufe 12 ansteuert. Diese Endstufen 11, 12 können als Leistungs- bzw. Treiberendstufen diskret aufgebaut oder in einer gemeinsamen Einheit integriert sein, wie beispielsweise einer integrierten Schaltung und speisen einen ersten Motor 13, der in diesem Ausführungsbeispiel ein Antriebs- (Capstan-) Motor eines Videorekorders mit der Typenbezeichnung F2QKB30T von Sankio oder VMX 800 von Sony sein soll, bzw. einen zweiten Motor 14 an, der hier ein Trommel- (Drum-) Motor der Ausführung zum Beispiel S2PSLPTT03 von Thomson ist. Zur Überwachung von Drehposition und/oder Drehgeschwindigkeit sind entsprechende Sensoren 15, beispielsweise ein MRH-Element der Type DM 211 von Sony bzw. 16, beispielsweise eine Lichtschranke, vorgesehen. Die Sensoren 15, 16 geben ihre Signale an das Steuergerät 10 ab. Das Signal eines Temperatursensors 17, der die Temperatur der Endstufen 11, 12 erfaßt, wird in diesem Ausführungsbeispiel durch eine Signalaufbereitungsstufe 18 aufbereitet und ein entsprechendes Temperatursignal Ts wird dem Steuergerät 10 zugeführt.

Der Temperatursensor 17 kann im Bereich der Endstufen 11, 12 angeordnet sein oder mit diesen integriert sein, wie es in Fig. 1 angedeutet ist.

Bei einer bevorzugten Ausführungsform dient eine U_{BE}-Strecke von mit Verstärkermitteln integrierten Transistoren als Temperatursensor 17.

Im folgenden wird eine mögliche Funktion des Ausführungsbeispiels nach Fig 1 im Zusammenhang mit Fig. 2 beschrieben.

Zu Beginn des Betriebes des Videorekorders, in dem die Schaltung der Fig. 1 angeordnet ist, wird der Suchbetrieb, also ein beschleunigter Abspielmodus, in an sich bekannter Weise gestartet. Dadurch wird der Antriebs- (Capstan-) Motor 13 und der Trommelmotor 14 angesteuert. Die erforderlichen Drehzahlen für die Motoren 13, 14 werden aufgrund einer Regelung von dem Steuergerät 10 vorgegeben. Die Endstufen 11, 12 setzen die von dem Steuergerät 10 gelieferten Signale in geeignete Ansteuersignale für die Motoren 13, 14 um.

Bei ordnungsgemäßem Betrieb wird sich die vom Sensor 17 gemessene Temperatur während der gesamten Betriebsdauer im Bereich
von To bis T1 befinden, der dem Normalbetriebs-Temperaturbereich entspricht. Unter ordnungsgemäßem Betrieb ist hier die Verwendung einer Videokassette, die mechanisch in Ordnung ist, und bei Vermeidung außergewöhnlicher thermischer Einflüsse, wie Sonneneinstrahlung, Behinderung von Luftzirkulation oder dergleichen, zu verstehen.

Das aufbereitete Signal Ts nimmt in dem Normalbetrieb einen ersten Spannungswert, beispielsweise Null Volt, an. Das Steuergerät 10 steuert die Endstufen 11, 12 derart an, daß die Motoren 13, 14 sich mit einer für den Suchbetrieb normalen Geschwindigkeit drehen.

Wird das Gerät jedoch nicht ordnungsgemäß in dem hier betrachteten Sinne betrieben, so wird der Normalbetriebs-Temperaturbereich nach einiger Zeit verlassen und es werden durch den Sensor 17 Temperaturen im Bereich
von T1 bis T2 gemessen, der einem sogenannten Sparbereich entspricht. Das Signal Ts weist beispielsweise einen getakteten Zustand auf, wenn nur eine Leitung zur Übertragung des Signales Ts vorgesehen ist. Daraufhin wird die Endstufe 11 durch das Steuergerät 10 derart angesteuert, daß die Drehzahl des Anstriebsmotors 13 derart reduziert wird, daß eine kaum merkliche Beeinträchtigung für einen Zuschauer auftritt. Die Reduzierung der Drehzahl nur für den Antriebsmotor ist sinnvoll, da so zum einen der Verbraucher mit einer hohen Leistungsaufnahme gedrosselt wird und zum anderen die Bilderfassung durch eine mit dem Trommelmotor 14 verbundenen Videotrommel nicht beeinträchtigt wird.

Reicht diese Leistungsreduzierung nicht aus, um eine weitere Erwärmung zu verhindern, so werden nach einem weiteren Zeitraum Temperaturen in einem Warnbereich
von T2 bis T3 gemessen. Das Signal Ts nimmt dann einen zweiten Spannungswert an, beispielsweise den einer positiven Versorgungsspannung. Daraufhin werden alle in Betrieb befindlichen Verbraucher, also insbesondere die Motoren 13, 14 durch das Steuergerät 10 über die Endstufen 11, 12 derart definiert angesteuert, daß die Motoren 13, 14 langsam heruntergeregelt werden und ein Ruhezustand erreicht wird ohne das Videoband zu zerstören. Reicht dies immer noch nicht aus um den Temperaturanstieg zu verhindern, so werden zu einem späteren Zeitpunkt Temperaturen im Bereich
oberhalb von T3 gemessen. Dieses entspricht einem sogenannten Alarmbereich, in dem eine akute Gefährdung für die Endstufe 11 und eventuell des gesamten Gerätes vorliegt. In diesem Bereich behält das Signal Ts den zweiten Spannungswert bei. Der Motor 13 wird von der Endstufe 11, bzw. durch mit der Endstufe 11 integrierte Mittel, vollständig abgeschaltet. Ein Mittel kann zum Beispiel das von der Signalaufbereitungsstufe 18 oberhalb von T3 gelieferte Signal sein, das auf direktem Weg intern und unter Umgehung des Steuergerätes 10 auf die Endstufen 11, 12 einwirkt, so daß eine "hardware"-mäßige Abschaltung der Endstufen sowie ihrer Verbraucher vorgenommen werden kann.

Dieser Betriebszustand ist deshalb besonders sinnvoll, da es insbesondere bei Integration mehrerer Endstufen in einer integrierten Schaltung durchaus möglich ist, daß die Ursache für die übermäßige Erwärmung bei Endstufen liegt, die üblicherweise keine außergewöhnliche Wärmeentwicklung aufweisen. Da das Abschalten nicht durch das Steuergerät 10 veranlaßt wird, wird ein Selbstschutz der Endstufen 11, 12 realisiert, der auch bei Ausfall des Steuergerätes 10 wirksam ist.

Werden die Temperaturen T1, T2, T3 durch die eingeleiteten Maßnahmen wieder unterschritten, so können die entsprechenden Ansteuerungen der dann auftretenden Betriebsbereiche durchgeführt werden. Das heißt beispielsweise, wenn durch den Warnbetrieb der Leistungsabfall derart vermindert wird, daß die Warntemperatur T2 unterschritten wird, so erfolgt eine Sparbetrieb-Ansteuerung. Bei weiterer Temperaturermäßigung unterhalb von T1 erfolgt eine Normalansteuerung.

Dabei kann auch eine Hysterese vorgesehen sein, so daß die entsprechenden Ansteuerungen bei Temperaturen T1', T2', T3' (siehe Fig. 2) eingeleitet werden, die unterhalb der Temperaturen T1, T2 bzw. T3 liegen.

Das in dem oben beschriebene Verfahren für den Suchlauf eines Videorekorders läuft in entsprechender Weise ab für den schnellen Vorlauf und den schnellen Rücklauf. Auch in diesen Betriebsarten werden der Antriebsmotor 13 und die Endstufe 11 stark beansprucht, so daß es zu einer übermäßigen Temperaturentwicklung kommen kann.

Versionen des genannten Ausführungsbeispiels können zumindest eine der folgenden Variationen aufweisen:
- anstelle von einem Sparbereich können auch mehrere vorgesehen sein;
- anstelle der stufenweise Verminderung bei Erreichen der Spartemperatur (T1) kann eine im wesentlichen kontinuierliche Herabregelung der Leistung vorgesehen sein;
- anstatt die Ansteuerleistung eines Video-Antriebsmotors zu reduzieren, können auch sonstige Verbraucher verringert angesteuert werden, wie Motoren eines Compactdisc (CD) Spielers, eines Tonband- bzw. Tonkassetten-Gerätes (Compactcassette CC bzw. Digital Compactcassette DCC), eines elektrisch angetriebenen Land-, Luft oder Wasserfahrzeuges oder aber sonstige Verbraucher, wie eine elektrische Lichtquelle, beispielsweise eines Projektionsgerätes, oder dergleichen;
- die verschiedenen Betriebszustände, Normalbetrieb, Sparbetrieb, Warnbetrieb, Alarm können durch optische und/oder akustische Mittel angezeigt werden;
- es kann auf den Alarmbetrieb verzichtet werden;
- der Wert des Temperatursignals Ts kann dadurch variiert werden, daß eine Vielzahl von Leitungen verwendet werden, die entsprechend einem vorgegebenem Kode, wie beispielsweise dem Binärkode, mit einer Spannung beaufschlagt werden;
- bei Verwendung von nur einer Leitung zur Übertragung des Temperatursignals Ts kann dessen Wert eingestellt werden über eine Variation der Frequenz und/oder des Spannungswertes des übertragenen Signales.

## Patentansprüche

1. Verfahren zur Temperaturüberwachung eines Gerätes mit Endstufen für mehrere Verbraucher, wobei die Verbraucher (13, 14)
- innerhalb eines Normalbetrieb-Temperaturbereichs normal angesteuert werden und
- innerhalb eines Warnbetrieb-Temperaturbereiches mit reduzierter Leistung angesteuert werden, so daß ein vorgegebener Betriebszustand erreicht wird,
und wobei zusätzlich einer oder mehrere Sparbetrieb-Temperaturbereiche zwischen dem Normalbetrieb-Temperaturbereich und dem Warnbetrieb-Temperaturbereich vorgesehen sind, dadurch gekennzeichnet, daß im Sparbetrieb-Temperaturbereich nur bestimmte Verbraucher (13, 14) des Gerätes mit verminderter Leistung angesteuert werden und ein oder mehrere andere Verbraucher des Gerätes mit unverminderter Leistung angesteuert werden, wobei die Auswahl dieser Verbraucher (13, 14) so erfolgt, daß zum einen das Überschreiten von kritischen Betriebstemperaturen weitgehend vermieden wird und zum anderen die Beeinträchtigung für mit dem Gerät zusammenwirkende Mittel reduziert wird.

2. Verfahren nach Anspruch 1, dadurch gekennzeichnet, daß im Sparbetrieb nur die Leistung derjenigen Verbraucher vermindert wird, die eine hohe Leistungsaufnahme haben.

3. Verfahren nach Anspruch 1 oder 2, dadurch gekennzeichnet, daß die Leistung in dem Sparbetrieb abgestuft oder kontinuierlich vermindert wird.

4. Verfahren nach einem der Ansprüche 1 bis 3, dadurch gekennzeichnet, daß der jeweils erreichte Temperaturbereich optisch und/oder akustisch angezeigt wird.

5. Verfahren nach einem der Ansprüche 1 bis 4, dadurch gekennzeichnet, daß oberhalb an den Warnbetrieb-Temperaturbereich zusätzlich ein Alarmbetrieb-Temperaturbereich vorgesehen ist, innerhalb dessen die Verbraucher abgeschaltet werden.

6. Vorrichtung zur Temperaturüberwachung eines Gerätes mit Temperatursensoren und entsprechenden Temperatur-Vergleichsmitteln, die mit einem Steuergerät (10) zusammenwirken und Endstufen (11, 12) derart ansteuern, daß mehrere Verbraucher (13, 14)
- innerhalb eines Normalbetrieb-Temperaturbereichs normal angesteuert werden und
- innerhalb eines Warnbetrieb-Temperaturbereiches mit reduzierter Leistung angesteuert werden, so daß ein vorgegebener Betriebszustand erreicht wird,
und wobei das Steuergerät (10) zusätzlich einen oder mehrere Sparbetrieb-Temperaturbereiche zwischen dem Normalbetrieb-Temperaturbereich und dem Warnbetrieb-Temperaturbereich festlegt, dadurch gekennzeichnet, daß das Steuergerät (10) im Sparbetrieb-Temperaturbereich nur bestimmte Verbraucher (13, 14) des Gerätes zur Abgabe einer verminderten Leistung ansteuert und ein oder mehrere andere Verbraucher des Gerätes mit unverminderter Leistung ansteuert, wobei die Auswahl dieser Verbraucher (13, 14) so erfolgt, daß zum einen das Überschreiten von kritischen Betriebstemperaturen weitgehend vermieden wird und zum anderen die Beeinträchtigung für mit dem Gerät zusammenwirkende Mittel reduziert wird.

7. Vorrichtung nach Anspruch 6, dadurch gekennzeichnet, daß im Sparbetrieb das Steuermittel (10) nur diejenigen Endstufen (11) zur Abgabe einer verminderten Leistung ansteuert, deren Verbraucher eine hohe Leistungsaufnahme haben.

8. Vorrichtung nach Anspruch 6 oder 7, dadurch gekennzeichnet, daß das Steuergerät (10) die Endstufen (11) derart ansteuert, daß die Leistung in dem Sparbetrieb abgestuft oder kontinuierlich vermindert wird.

9. Vorrichtung nach einem der Ansprüche 6 bis 8, dadurch gekennzeichnet, daß Anzeigemittel vorgesehen sind, die den jeweils erreichten Temperaturbereich optisch und/oder akustisch anzeigen.

10. Vorrichtung nach einem der Ansprüche 6 bis 9, dadurch gekennzeichnet, daß die Temperatur-Vergleichsmittel derart ausgebildet sind, daß oberhalb an den Warnbetrieb-Temperaturbereich zusätzlich ein Alarmbetrieb-Temperaturbereich vorgesehen ist, innerhalb dessen die Verbraucher abgeschaltet werden.

## Claims

1. Method of monitoring the temperature of an apparatus incorporating output stages for a plurality of loads, wherein the loads (13, 14)
- are driven normally within a temperature range for normal operation and
- are driven at reduced power within a temperature range for a warning mode so that a predetermined operational state is thereby achieved,
and wherein there are additionally provided one or more temperature ranges for an economiser mode between the temperature range for normal operation and the temperature range for the warning mode, characterised in that, only certain loads (13, 14) of the apparatus are driven at reduced power in the temperature range for the economiser mode and one or more other loads of the apparatus are driven without any reduction in power, whereby the selection of these loads (13, 14) is effected such that, on the one hand, one avoids to a large extent critical operating temperatures from being exceeded and, on the other hand, such that any detrimental effect upon the means co-operating with the apparatus is reduced.

2. Method in accordance with Claim 1, characterised in that, only the power for those loads having a high power consumption is reduced in the economiser mode.

3. Method in accordance with Claim 1 or 2, characterised in that, the power is reduced continuously or step-by-step in the economiser mode.

4. Method in accordance with any of the Claims 1 to 3, characterised in that, the currently occurring temperature range is indicated optically and/or acoustically.

5. Method in accordance with any of the Claims 1 to 4, characterised in that, there is additionally provided above the temperature range for the warning mode a temperature range for an alarm mode within which the loads are switched-off.

6. Device for monitoring the temperature of an apparatus using temperature sensors and appropriate temperature comparison means which co-operate with a control device (10) and control output stages in such a way that a plurality of loads (13, 14)
- are driven normally within a temperature range for normal operation and
- are driven at reduced power within a temperature range for a warning mode so that a predetermined operational state is thereby achieved,
and wherein the control device (10) additionally defines one or more temperature ranges for an economiser mode between the temperature range for normal operation and the temperature range for the warning mode, characterised in that, the control device (10) controls only certain loads (13, 14) of the apparatus such as to provide reduced power in the temperature range for the economiser mode and controls one or more other loads of the apparatus at unreduced power, whereby the selection of these loads (13, 14) is effected such that, on the one hand, one avoids to a large extent critical operating temperatures from being exceeded and, on the other hand, such that any detrimental effect upon the means co-operating with the apparatus is reduced.

7. Device in accordance with Claim 6, characterised in that, in the economiser mode, the control device (10) only controls those output stages (11) so as to provide reduced power, for which said output stages their loads have a high power consumption.

8. Device in accordance with Claim 6 or 7, characterised in that, the control device (10) controls the output stages (11) in such a way that the power is reduced continuously or step-by-step in the economiser mode.

9. Device in accordance with any of the Claims 6 to 8, characterised in that, there are provided indicating means which indicate the currently occurring temperature range optically and/or acoustically.

10. Device in accordance with any of the Claims 6 to 9, characterised in that, the temperature comparison means are constructed in such a way that there is additionally provided above the temperature range for the warning mode a temperature range for an alarm mode within which the loads are switched-off.

## Revendications

1. Procédé de contrôle de la température d'un appareil muni d'étages finaux pour plusieurs consommateurs, où les consommateurs (13, 14)
- sont commandés à l'intérieur d'une plage de température en mode normal de fonctionnement et
- sont commandés avec une puissance moindre à l'intérieur d'une plage de température en mode d'avertissement de sorte qu'un mode de fonctionnement donné est atteint,
et où, en plus, une ou plusieurs plages de température en mode de sauvegarde sont prévues entre la plage de température en mode normal et celle en mode d'avertissement, caractérisé en ce que, dans la plage de température en mode de sauvegarde, seuls quelques consommateurs (13, 14) de l'appareil sont commandés avec une puissance amoindrie et un ou plusieurs consommateurs de l'appareil sont commandés avec une puissance constante, où ces consommateurs (13, 14) sont choisis de sorte qu'on évite que des températures critiques de fonctionnement soient atteintes et qu'on réduit les conséquences pour les dispositifs fonctionnant de concert avec l'appareil.

2. Procédé d'après la revendication 1, caractérisé en ce que, en mode de sauvegarde, seule la puissance fournie aux consommateurs absorbant un niveau élevé de puissance est réduite.

3. Procédé d'après la revendication 1 ou 2, caractérisé en ce que la puissance est réduite par étapes en mode de sauvegarde ou est diminuée de manière continue.

4. Procédé d'après l'une des revendications 1 à 3, caractérisé en ce que le niveau de température atteint à chaque fois est constamment affiché visuellement et/ou de manière sonore.

5. Procédé d'après l'une des revendications 1 à 4, caractérisé en ce que, au-dessus de la plage de température en mode d'avertissement, une plage de température en mode d'alarme est prévue, à l'intérieur de laquelle le consommateur est déconnecté.

6. Dispositif de contrôle de la température d'un appareil muni de capteurs de température et de dispositifs de comparaison des températures correspondants, fonctionnant de concert avec un appareil de commande (10) et commandant des étages finaux (11, 12) de telle sorte que plusieurs consommateurs (13, 14)
- sont commandés de manière normale à l'intérieur d'une plage de température en mode normal et
- sont commandés avec une puissance amoindrie à l'intérieur d'une plage de température en mode d'avertissement de sorte qu'un mode de fonctionnement donné est atteint,
et où l'appareil de commande (10) détermine, en plus, une ou plusieurs plages de température en mode de sauvegarde entre la plage de température en mode normal et celle en mode d'avertissement, caractérisé en ce que l'appareil de commande (10) dans la plage de température en mode de sauvegarde agit seulement sur certains consommateurs (13, 14) de l'appareil afin de produire une puissance réduite et sur un ou plusieurs consommateurs de l'appareil avec une puissance constante, où ces consommateurs sont choisis de sorte qu'on évite que des températures critiques de fonctionnement soient atteintes et qu'on réduit les conséquences pour les dispositifs fonctionnant de concert avec l'appareil.

7. Dispositif d'après la revendication 6, caractérisé en ce que, en mode de sauvegarde, le dispositif de commande (10) agit seulement sur les étages finaux (11) dont les consommateurs absorbent un niveau élevé de puissance afin de produire une puissance amoindrie.

8. Dispositif d'après la revendication 6 ou 7, caractérisé en ce que l'appareil de commande (10) agit sur les étages finaux (11) de telle sorte que la puissance en mode de sauvegarde est réduite par étapes ou de manière continue.

9. Dispositif d'après une des revendications 6 à 8, caractérisé en ce que des dispositifs d'affichage, signalant visuellement et/ou de manière sonore les niveaux de température atteints à chaque fois, sont prévus.

10. Dispositif d'après une des revendications 6 à 9, caractérisé en ce que les dispositifs de comparaison des température, où est prévue, au dessus d'une plage de température en mode d'avertissement, une plage de température en mode d'alarme, à l'intérieur de laquelle le consommateur est déconnecté.
